# EUROPEAN PATENT SPECIFICATION

(11) **EP 0 774 350 B1**
(45) Date of publication and mention of the grant of the patent: **07.08.2002**
(21) Application number: 96308301.9
(22) Date of filing: 15.11.1996
(51) Int. Cl.: B32B 27/32, B32B 27/18

(54) **POLYOLEFIN FILM**
POLYOLEFINFOLIE
FILM EN POLYOLEFINE

(30) Priority: 15.11.1995 GB 9523349
(43) Date of publication of application: 21.05.1997
(73) Proprietor: Trespaphan GmbH, 66539 Neunkirchen (DE)
(72) Inventor: Alder, Paul Thomas, Swindon, Wiltshire, SN2 4BG (GB); Gilbert, Timothy James, Swindon, Wiltshire, SN3 4BE (GB)
(74) Representative: Luderschmidt, Schüler & Partner GbR

(56) References cited:
- EP-A- 0 411 968
- EP-A- 0 536 917

## Description

This invention concerns polymeric films, and more particularly polypropylene films, having a low heat seal threshold combined with the ability to form heat seals at high speeds.

Heat sealable polypropylene films are widely used in the packaging art, and they are used on a variety of types of packaging machinery. However, there is a continuing desire for films which will run satisfactorily at ever higher packaging speeds whilst being sealable at low temperatures. Increasing packaging machine speed results in packaging film having to be fed through them at increased speeds, and this in turn results in decreased contact times between the film and hot surfaces used to heat the film so that the desired heat seals can be formed. These problems can be encountered with many types of packaging machine, but they have been found to be especially acute with horizontal form fill seal machines.

Although increasing the temperature of the hot surfaces used to heat the film can counter the effect of increased film speed, as more heat can thereby be introduced into the film in a shorter period of time, it has the disadvantage of subjecting the film which contacts the hot surface to temperatures which themselves have undesirable effects on the film. For example, the high temperatures can lead to shrinkage of biaxially oriented films.

In addition to changes in the sealing properties of films caused by increasing the throughput of packaging machines using them, the slip properties of the films can also change as a result of the changes in temperature to which the films are exposed. This can result in films which run satisfactorily through packaging machines at one speed being unsatisfactory at higher speeds, apart from the inherent frictional characteristics of the films.

EP-A-0,411,968 discloses an oriented, heat-sealable polymer film laminate having a core of isotactic polypropylene, a first outer layer of isotactic polypropylene containing an anti-blocking agent and a second outer, heat sealable layer containing an anti-blocking agent and a silicone oil which, in service, transfers to provide a coefficient friction-reducing amount thereof on the exposed surfaces of both layers.

In order to reduce the problems associated with the use of increased packaging speeds, it has been proposed to coat packaging films with materials which enable the films to be sealed without heating, that is by the use of so-called cold seal adhesives, or with a coating material which will heat seal at low temperatures. Such coating steps have the disadvantage of requiring additional processing steps and equipment, thereby adding to the cost and complexity of the overall packaging process. It would therefore be desirable to have polypropylene films which can be produced without the necessity of a coating step but which can be run through packaging machinery at high speeds and can be heat sealed at low temperatures.

According to the present invention there is provided a biaxially oriented polyolefin film according to claim 1.

Films in accordance with the present invention have exhibited many advantageous properties compared with hitherto proposed films. Thus heat seal thresholds of less than 85°C have been achieved with the first outer surface sealing satisfactorily to itself at film speeds in excess of 60m/min using a conventional horizontal form fill seal machine. Furthermore films in accordance with the present invention have exhibited good optical properties combined with good stiffness. In addition, the films have shown stable slip properties which have enabled them to be used satisfactorily over a wide range of throughput speeds from much less than 60m/min to in excess of this figure.

The random propylene/butene-1 copolymer of the first outer layer should contain from 25 to 35, mole percent of units derived from butene-1. In general, the balance of the copolymer will be derived from propylene. However, the copolymer can in addition contain units derived from ethylene, but usually in an amount not exceeding 5 mole percent of the copolymer.

The first outer layer of films in accordance with the invention contains an antiblock agent, for example silica, cross-linked poly-methyl methacrylate, silicone or a silicone elastomer. The mean particle size of the antiblock agent can be as proposed hitherto for antiblock agents for use in polyolefin films, for example in the range of from 1 to 5µm. However, it is generally preferred that the mean particle size of the antiblock agent is at least as great as the thickness of the first outer layer in which it is present, in order that particles of the antiblock agent can provide an antiblocking effect. The amount of antiblock agent present in the first outer layer is preferably from 500 to 5000, and preferably from 1000 to 3000, ppm by weight of the outer layer. The preferred antiblock agent for the first outer layer is silica.

The first outer layer is 1 to 2 µm thick as films with thinner outer layers have not been found to run satisfactorily on horizontal form-fill-seal machines at speeds as high as 60m/min. Increasing the thickness of the first outer layer has been found to increase the speed at which the films can run satisfactorily on horizontal form-fill-seal machines. However, continuing to increase the thickness of the first outer layer has been found not necessarily to result in an increase in the speed at which the films can be run, there being a point where the maximum speed of satisfactory running decreases with increasing thickness of the layer. This appears to occur as the thickness of the first outer layer reaches and then exceeds the mean particle size of the antiblock agent.

In addition to changing the thickness of the first outer layer, the maximum speed at which films of the present can be run satisfactorily on horizontal form-fill-seal machines can change with the composition of the polymer used to form this layer. Higher butene-1 contents have been found to enable thinner layers to be used to achieve comparable running speeds.

The second outer surface of films of the present invention should have a coefficient of friction of from 0.1 to 0.35, preferably from 0.2 to 0.25, in order that the films have adequate film to metal slip when they are used in horizontal form-fill-seal machines at speeds of 60m/min or more.

The second outer layer can be made from a variety of olefin polymers provided they enable the second outer film surface to have the required coefficient of friction. They can, for example, be of a propylene homopolymer, although they must be of a heat sealable copolymer. The second outer layer is preferably printable. Examples of copolymers which can be used for the second outer layer include polymers containing a major amount of units derived from propylene and minor amounts of one or more of ethylene, butene-1 and higher aliphatic olefins, eg hexene-1.

The second outer layer of films of the present invention will usually contain an antiblock agent in order to enable the films to run at speeds of 60m/min or more. Examples of antiblock agents which can be used include silica, cross-linked polymethyl methacrylate, silicone spheres and silicone elastomers. The mean particle size of the antiblock agent used for the second outer layer is preferably from 1 to 5µm. The amount of antiblock present in the second outer layer is preferably from 500 to 5000, and preferably 1000 to 3000, ppm by weight of the second outer layer.

Either or both of the outer layers of films of the present invention can include an antistatic agent and/or a slip agent. Examples of antistatic agents which can be used include bis-ethoxylated long chain amines. Examples of slip agents which can be used include fatty acid amides, e.g. erucamide, and fatty acid esters of glycerol, e.g. glyceryl mono-stearate.

Although films in accordance with the present invention can consist of only two layers, they will in general include at least one further polyolefin layer therebetween. Such a layer or layers form a core for the films.

When a single core layer is used, it is preferably formed of isotactic polypropylene with an isotacticity of greater than 95%. Such a core layer can also contain various additives, for example slip and/or antistatic agents, agents which introduce microvoids when the films are biaxially oriented, e.g. chalk or finely dispersed polymer particles with a particle size of from 0.5 to 10µm, submicronic pigments, e.g. titanium dioxide, barium sulfate, magnesium silicate, calcium silicate or low molecular weight hydrogenated hydrocarbon resins.

In order to achieve particularly good running on horizontal form-fill-seal machines, it is preferred for the core layer or layers to contain certain types of additives when certain types of antiblock agents are used in the first polymeric layer. For example when silica alone is used as the antiblock agent, it is generally preferred to use a combination of a bis-ethoxylated amine, a fatty acid amide (e.g. erucamide), and a glyceryl ester of a fatty acid (e.g. glyceryl mono-stearate). Using other antiblock agents, for example polymethyl methacrylate or silica in combination with a silicone elastomer, it is possible to omit both the bis-ethoxylated amine and the fatty acid amide. However, when silicone spheres or silica are used in combination with silicone oil in the first outer layer, it is generally preferred only to omit the fatty acid amide.

When a fourth polymeric layer is present it is preferably between the said second outer layer and a layer of a propylene polymer. The fourth polymeric layer can be provided for various reasons, for example to provide the films with barrier properties to oxygen and/or water vapor. Examples of polymers which can be used for the fourth polymeric layer include ethylene vinyl alcohol copolymers, polyacrylonitrile or polyketones. As will be appreciated by those skilled in the art, when such a fourth layer is present it will often be necessary to include tie layers in order to increase the adhesion of the fourth layer to the adjacent polyolefin layers.

Films in accordance with the present invention can be made in a variety of thicknesses. However, it is generally preferred that the first and second outer layers have thicknesses within certain thickness ranges, for example as hereinbefore described for the outer layer. In particular it has been found that this can enhance the heat sealing and/or the slip characteristics of the films. The first outer layer should be at least 0.7µm thick, but preferably not more than 3µm thick. The second outer layer is preferably from 1 to 5µm thick.

Films in accordance with the present invention can be produced by known methods. For example, the various layers required in the finished films can be simultaneously extruded to form a multi-layer web which is thereafter biaxially stretched to form a biaxially oriented film. The coextrusion and stretching can be effected by known methods, for example simultaneously using the so-called bubble process or sequentially using heated rolls to effect stretching in the direction of extrusion of the web and then using a stenter oven to effect stretching in the transverse direction. However, films of the present invention can also be produced by laminating a first precursor film, including the first surface of the finished film, to a second precursor film, including the second surface of the finished film. Lamination of first and second precursor films enables films of the present invention to be produced which have the two desired outer surfaces from precursor films which do not themselves include both of such surfaces. For example, at least one of the precursor films can be metallized before lamination, thereby enabling films of the present invention to include at least one metal layer within their structure.

Films in accordance with the present invention are preferably subjected to a treatment to increase their surface energy, this generally being applied to the second outer surface of the films rather than to their first outer surface as the first surface has the low heat seal threshold and such treatments often increase the heat seal threshold of polymers.

The following Examples are given by way of illustration only. All parts per million are by weight of the respective layers.

### Example 1

A flat three layer polymer web was produced by coextruding through a slot die a first outer layer consisting of a propylene/ butene-1/ethylene terpolymer (28 mole percent butene-1 and 1wt% of ethylene - balance propylene) which contained 0.1wt% of finely divided silica (average particle size 5µm) and 0.1wt% of cross-linked silicone spheres (average particle size 4.5µm, a second outer layer of a propylene/ethylene copolymer (about 5wt% ethylene) containing 0.1wt% of finely divided silica (average particle size 4µm) and 0.1wt% of erucamide, a core layer of a propylene homopolymer containing 0.16wt% of glycerol monostearate, 0.08wt% of erucamide, and 0.04wt% of a bis-ethoxylated amine antistatic agent.

The web was then stretched 4.5 times in the direction of extrusion by passing it over heated rollers rotating at different peripheral speeds, and then 10 times in the transverse direction in a stenter oven at 165°C. The resulting biaxially oriented film was heat set and cooled, after which the second outer layer was subjected to corona discharge treatment to increase its surface energy to 40mJ/m² before the film was wound up.

This film had a total thickness of 30µm, the second outer layer being 0.8µm thick and the first outer layer being 1.4µm thick.

The heat seal threshold of the first outer surface of this film was 82°C, and it produced good heat seals when tested at 70m/min on a "Versaflow" (Trade Mark) horizontal form fill seal machine using a heat seal jaw temperature of 145°C.

### Examples 2-10

A series of three layer biaxially oriented coextruded films was produced using the method described in Example 1, various thicknesses of terpolymer being used for the first outer layer and a variety of core layer additives and/or first layer antiblock agents being used as shown in Table 1.

All of the films showed satisfactory hot slip characteristics and produced satisfactory heat seals first outer layer to first outer layer at the speeds at which they would run. However, their ability to run on a Versaflow horizontal form-fill-seal machine did vary as shown in Table 1.

**Table 1**

| Example First Additives/ Properties Layer Antiblock | | | |
|---|---|---|---|
| Comparative 2 | 0.5µm | 1,4 | Unstable running at 55m/min |
| 3 | 1.4µm | 1,4 | Ran well at >65m/min |
| 4 | 1.4µm | 2,4 | Ran well at >65m/min |
| 5 | 1.4µm | 4 | Unstable at >65m/min and very squeaky |
| Comparative 6 | 3.0µm | 4 | Would not run, very squeaky/inside face blocked |
| Comparative 7 | 1.4µm | None | Worse than Example 6 |
| 8 | 1.4µm | 2 | As Example 5 but less noisy |
| 9 | 1.4µm | 3 | Ran easily at 65m/min |
| Comparative 10 | 2.5µm | 5 | As Example 5 |
| Table 1 additives/antiblocks 1. 0.12wt% erucamide in core 2. 0.04wt% bis-ethoxylated amine plus 0.08wt% erucamide plus 0.17wt% glyceryl monostearate in core 3. 0.05wt% bis-ethoxylated amine in core and first outer layer antiblock is 0.1wt% 4.5µm silicone spheres plus 1.5wt% silicone oil 4. first outer layer antiblock is 1000ppm of 4.5µm silica plus 1000ppm 4.5µm silicone spheres 5. first outer layer antiblock is 1000ppm of 2.0µm silica | | | |

## Claims

1. A biaxially oriented polyolefin film comprising a first outer polymeric layer defining a first outer surface and a second outer polymeric layer defining a second outer surface, the first outer layer containing an antiblocking agent and being 1 to 2 µm thick, the polymer of the first layer comprising a random propylene/butene-1-copolymer containing from 25 to 35 mole percent of units derived from butene-1 and the second outer polymeric layer is made from a heat sealable copolymer and the second outer surface having a coefficient of friction of from 0,1 to 0,35 and wherein the film has a heat seal threshold of less than 85°C

2. A film according to any of the preceding claims wherein the said second surface has been treated to increase its surface energy.

3. A film according to any of the preceding claims, wherein the said second surface is printable.

4. A film according to any of the preceding claims, having at least one core layer between the first and second outer layers.

5. A film according to claim 4, having a voided core layer between the first and second outer layers.

6. A film according to claim 4 or claim 5, wherein the core layer or layers include a pigment.

7. A film according to any of claims 4 to 6, wherein the core layer or layers include a substance which decreases the water vapor or oxygen permeability of the film.

8. A film according to any of the preceding claims, which comprises a laminate of a first precursor film and a second precursor film which respectively contribute the said first and second surfaces to the resulting film laminate.

9. A film according to claim 8, wherein at least one of the precursor films includes a metallized layer.

## Patentansprüche

1. Biaxial orientierte Polyolefinfolie bestehend aus einer ersten polymeren Außenschicht als erste Außenfläche und einer zweiten polymeren Außenschicht als zweite Außenfläche, wobei die erste Außenschicht ein Antiblockmittel enthält und 1 - 2 µm dick ist, wobei das Polymer der ersten Schicht ein statistisches Propylen-1-Buten-Copolymer mit 25 - 35 Molprozent von 1-Buten abgeleiteten Struktureinheiten umfaßt und wobei die zweite polymere Außenschicht aus einem heißsiegelfähigen Copolymer besteht und die zweite Außenfläche einen Reibungskoeffizienten von 0,1 bis 0,35 besitzt und wobei die Heißsiegelschwelle der Folie < 85°C ist.

2. Folie gemäß Anspruch 1, wobei die genannte zweite Oberfläche zur Erhöhung ihrer Oberflächenenergie behandelt wurde.

3. Folie gemäß einem der vorausgehenden Ansprüche, wobei die genannte zweite Oberfläche bedruckbar ist.

4. Folie gemäß einem der vorausgehenden Ansprüche, mit mindestens einer Kernschicht zwischen der ersten und der zweiten Außenschicht.

5. Folie gemäß Anspruch 4, mit einer Lufteinschlüsse enthaltenden Kernschicht zwischen der ersten und der zweiten Außenschicht.

6. Folie gemäß Anspruch 4 oder 5, wobei die Kernschicht(en) ein Pigment enthält (enthalten).

7. Folie gemäß einem der Ansprüche 4 bis 6, wobei die Kernschicht(en) eine Substanz enthält (enthalten), welche die Wasserdampf- oder Sauerstoffdurchlässigkeit der Folie vermindert.

8. Folie gemäß einem der vorausgehenden Ansprüche, die aus einem Laminat einer ersten Vorprodukt-Folie und einer zweiten Vorprodukt-Folie besteht, wobei die beiden Vorprodukt-Folie zu der dabei entstehenden Laminatfolie die erste bzw. die zweite Außenfläche beitragen.

9. Folie gemäß Anspruch 8, wobei mindestens eine der Vorprodukt-Folien eine metallisierte Schicht enthält.

## Revendications

1. Film de polyoléfine soumis à une orientation biaxe, comprenant une première couche polymère externe définissant une première surface externe et une deuxième couche polymère externe définissant une deuxième surface externe, la première couche externe contenant un agent s'opposant à l'adhérence de contact entre feuilles et possédant une épaisseur de 1 à 2 µm, le polymère de la première couche comprenant un copolymère statistique de propylène/butène-1 contenant, à concurrence de 25 à 35 moles %, des unités qui dérivent du butène-1, et la deuxième couche polymère externe est constituée d'un copolymère thermosoudable, la deuxième surface externe possédant un coefficient de friction de 0,1 à 0,35, et dans lequel le film possède un seuil de thermosoudage inférieur à 85 °C.

2. Film selon l'une quelconque des revendications précédentes, dans lequel ladite deuxième surface à été traitée pour augmenter son énergie superficielle.

3. Film selon l'une quelconque des revendications précédentes, dans lequel ladite deuxième surface peut être imprimée.

4. Film selon l'une quelconque des revendications précédentes, possédant au moins une couche centrale entre les première et deuxième couches externes.

5. Film selon la revendication 4, possédant une couche centrale munie de lacunes entre les première et deuxième couches externes.

6. Film selon la revendication 4 ou 5, dans lequel la ou les couches centrales englobent un pigment.

7. Film selon une quelconque des revendications 4 à 6, dans lequel la ou les couches centrales englobent une substance qui diminue la perméabilité du film à la vapeur d'eau ou à l'oxygène.

8. Film selon l'une quelconque des revendications précédentes, qui comprend un stratifié d'un premier film précurseur et d'un deuxième film précurseur qui contribuent respectivement à la formation desdites première et deuxième surfaces pour obtenir le stratifié de film résultant.

9. Film selon la revendication 8, dans lequel au moins un des films précurseurs englobe une couche métallisée.
